# EUROPEAN PATENT APPLICATION

(11) **EP 2 371 613 A1**
(43) Date of publication of application: **05.10.2011**
(21) Application number: 10158244.3
(22) Date of filing: 29.03.2010
(51) Int. Cl.: B60L 13/10

(54) **Magnetostatic levitation and propulsion systems for moving objects**

(71) Applicant: Ji, Qigen, Daly City, California 94015 (US)
(72) Inventor: Ji, Qigen, Daly City, California 94015 (US)
(74) Representative: Heare, Tanya

(57) **Abstract**

The invention is a novel mechanism of magnetic suspension and propulsion technologies in which a spring-like magnetic force is produced through interactions between magnets and ferrous materials such as steel. The technologies are named as Magnetostatic Suspension (MSS) and Magnetostatic Propulsion (MSP) respectively because of their magnetostatic nature of forces generated. By utilizing the technologies four key embodiments of the invention have been disclosed and described in this presentation: a MSS and MSP maglev vehicle system in which a vehicle body is lifted up and stabilized by such magnetostatic forces above a full steel rail both horizontally and vertically; a MSP long-stator linear motor system in which a rotor can be driven up along a magnet-free and coil-free steel rail; a MSS Permanent Magnet Magnetic Bearing System (PMMB) system in which a steel shaft is levitated standstill by a fully permanent magnets assembly for frictionless rotating; a MSS maglev wind turbine system in which a magnet-free turbine body can hover standstill over a permanent magnet base assembly spinning frictionlessly with low inertia and low cut-in wind speed threshold.

## Description

### FIELD OF THE INVENTION

The present invention is a novel mechanism of magnetostatic suspension (MSS) and magnetostatic propulsion (MSP) technologies. A spring-like magnetic force is produced through interactions between magnets and ferrous materials such as steel rail, which can be used to levitate and/or propel a moving object over a magnet-free steel rail track or a steel base.

### BACKGROUND OF THE INVENTION

The present invention is basically a novel mechanism of magnetostatic suspension (MSS) and magnetostatic propulsion (MSP) between magnets and ferrous or steel rail tracks or shafts, and more specifically, are novel mechanisms of magnetostatic suspension and propulsion for moving objects, and further more, the invention includes, as an embodiment of the invention, a MSS and MSP maglev vehicle technologies, in which a vehicle is suspended and propelled by the magnetostatic forces generated between magnet systems and steel rail track or shaft systems. The maglev system is compatible with conventional track, and therefore does not require a new infrastructure for its entire route. The spring-like levitation is stable and easy to control so no sophisticated computer system is required. The unique magnet system design provides a compact force generator of levitation so as to reduce weight of the vehicle body dramatically comparing to the current maglev technologies.

There are currently two primary types of maglev technologies: one called electromagnetic suspension (EMS) uses the attractive magnetic force of an electromagnet beneath a rail to lift the train up while the other called electrodynamic suspension (EDS) which uses a repulsive force between eddy currents induced in non-ferromagnetic metal conductors and superconducting magnet or permanent magnets to push the train away from the rail. Another experimental technology, which was designed, proven mathematically, peer reviewed, and patented, but is yet to be built, is the magnetodynamic suspension (MDS), which uses the attractive magnetic force of a permanent magnet array near a steel track to lift the train and hold it in place.

In electromagnetic suspension (EMS) systems, the train levitates above a steel rail while electromagnets, attached to the train, are oriented toward the rail from below. The electromagnets use feedback control to maintain a train at a constant distance from the track. The separation between the vehicle and the guideway must be constantly monitored and corrected by computer systems to avoid collision due to the unstable nature of electromagnetic attraction. An EMS system can provide both levitation and propulsion using an onboard linear motor. No wheels or secondary propulsion system needed. Its propulsion system's functions like a rotating electric motor whose stator is cut open and stretched lengthways along the underside of the full guideway and such infrastructure is quite sophisticated and high expenditure.

In electrodynamic suspension (EDS) systems, both the rail and the train exert a magnetic field, and the repulsive force between these magnetic fields levitates the train. The magnetic field in the train is produced by either electromagnets or by an array of permanent magnets. An induced magnetic field in wires or other conducting strips in the track create the repulsive force in the track. At slow speeds, the current induced in these coils and the resultant magnetic flux is not large enough to support the weight of the train. For this reason the train must have wheels or some other form of landing gear to support the train until it reaches a speed that can sustain levitation. EDS systems can only levitate the train using the magnets onboard, not propel it forward. As such, vehicles need some other technology for propulsion. A linear motor (propulsion coils) mounted in the track is one solution. Over long distances where the cost of propulsion coils could be prohibitive, a propeller or jet engine could be used. Propulsion coils on the guideway are used to exert a force on the magnets in the train and make the train move forward. The propulsion coils that exert a force on the train are effectively a linear motor: An alternating current flowing through the coils generates a continuously varying magnetic field that moves forward along the track. The frequency of the alternating current is synchronized to match the speed of the train. The offset between the field exerted by magnets on the train and the applied field create a force moving the train forward. EDS system is unable to levitate vehicles at a standstill, although it can provides levitation down to a much lower speed. Wheels are required for the system.

The current Maglev trains are not compatible with conventional track, and therefore require a new infrastructure for their entire route. This new infrastructure is high expenditure because of the drive or inductive coils must be embedded in the track along its full length. By contrast conventional high speed trains such as the TGV are able to run at reduced speeds on existing rail infrastructure, thus reducing expenditure where new infrastructure would be particularly expensive (such as the final approaches to city terminals), or on extensions where traffic does not justify new infrastructure. The weight of the large electromagnets in EMS and EDS is a major design issue. A very strong magnetic field is required to levitate a massive train. For this reason one research path is using superconductors to improve the efficiency of the electromagnets.

The present invention also includes, as an embodiment of the invention, a novel mechanism of magnetostatic propulsion (MSP) technology for a long-stator linear motor (LSLM), in which a magnet assembly as a rotor can be driven along a magnet-free and coil-free steel rail track or other steel assemblies. This novel MSP LSLM technology provides a low budget long distance and wheel-less transportation feasible by eliminating permanent magnets or coils on the steel rail track. The MSP LSLM technology gives more compact drive thrust or force and is featured with easy thrust, speed and brake control than its current linear servo motor counterpart.

A conventional linear motor is just an open cut of a conventional rotary motor in which its rotor is made of winding coils and its stator is made of a magnet rail. Its rotor and stator becomes a moving part or forcer and a magnet rail. Linear motor technology is becoming increasingly popular as applications take advantage of its features. In most linear servo motor technology, the forcer is a set of windings while the stator is a rail of magnets. With all those merits of the linear motors, but the cost of linear motors are expensive. This is because the price of permanent magnets and low volume of production as well. Since most linear motor designs mount rare earth magnets to the length of the rail, and the cost of these magnets is high, especially in cases of long travel linear motors (ex. Maglev rail) the cost of the magnet rail could be prohibitive. Also, linear motors are not compact force generators compared to a rotary motor with a transmission offering mechanical advantage. A linear motor's no friction can be a problem because without some resistance in the system, it is hard to position quickly and accurately.

The present invention also includes, as an embodiment of the invention, a novel magnetostatic permanent magnet bearing technology (MSS PMMB) in which a permanent magnet assembly as a bearing chock passively levitates a steel shift assembly in fully static state and allows the shaft assembly frictionless rotation. No extra electromagnetic balance assisting as in the current active magnetic bearing (AMB) technology is required. The MSS PMMB system is of full permanent magnets and elminates all those complexities and high expense and instablitiy inherited in the AMB technology. The MSS PMMB technology is a revolutionary and prospective to be used widely in industries for many applications, such as compressors, turbines, pumps, motors and generators and specifically maglev wind turbine as another embodiment of the invention. The suspension is passive and energy free or green. In a MSS wind turbine application, as another embodiment of this technology, the unique magnet array design reduces magnet usage by providing compact force output and dramatically reduces weight load to the wind turbine as well, because all magnets are mounted onto a turbine supporting base rather on the turbine spinning body. This technology also makes the wind-energy conversion more efficient and much low maintenance and extended life cycle to the wind turbine.

. A magnetic bearing is a bearing which supports a load using magnetic levitation. Magnetic bearings support moving machinery without physical contact, for example, they can levitate a rotating shaft and permit relative motion without friction or wear. They are in service in such industrial applications as electric power generation, petroleum refining, machine tool operation and natural gas pipelines. They are also used in the Zippe-type centrifuge used for uranium enrichment, in turbomolecular pumps where oil-lubricated bearings are a source of contamination, in watt-hour meters by electric utilities to measure home power consumption, in high-precision instruments and to support equipment in a vacuum, for example in flywheel energy storage systems. Magnetic bearings support the highest speeds of any kind of bearing; they have no known maximum relative speed. Magnetic bearing advantages include very low and predictable friction, ability to run without lubrication and in a vacuum. A flywheel in a vacuum has very low windage losses, but conventional bearings usually fail quickly in a vacuum due to poor lubrication. A new application of magnetic bearings is their use in artificial hearts. AMB bearing system's disadvantages include high cost, instablilty and relatively large size and complicated control circuit system.

It is difficult to build a fully passive magnetic bearing using permanent magnets due to the limitations imposed by Earnshaw's theorem, and techniques using diamagnetic materials are relatively undeveloped. As a result, most magnetic bearings require continuous power input and an active control system to hold the load stable. Because of this complexity, the magnetic bearings also typically require some kind of back-up bearing in case of power or control system failure.Two sorts of instabilities are very typically present with the active magnetic bearings (AMP). Firstly attractive magnets give an unstable static force, decreasing with greater distance, and increasing at close distances. Secondly since magnetism is a conservative force, in and of itself it gives little if any damping, and oscillations may cause loss of successful suspension if any driving forces are present, which they very typically are. An active magnetic bearing (AMB) consists of an electromagnet assembly, a set of power amplifiers which supply current to the electromagnets, a controller, and gap sensors with associated electronics to provide the feedback required to control the position of the rotor within the gap. These elements are added to its complexity and sophastication. The power amplifiers supply equal bias current to two pairs of electromagnets on opposite sides of a rotor. This constant tug-of-war is mediated by the controller which offsets the bias current by equal but opposite perturbations of current as the rotor deviates by a small amount from its center position. The gap sensors are usually inductive in nature and sense in a differential mode.

### DISCLOSURE OF THE INVENTION

It is an object of this invention to provide a novel magnetostatic suspension (MSS) and magnetostatic propulsion (MSP) technologies that provide spring-like suspension and propulsion forces between a magnet system and a steel rail or steel shaft system.

It is another object to provide a novel MSS and MSP maglev vehicle system as an embodiment of the present invention. In this system, MSS and MSP technologies are used in its levitation, stabilization, guidance and propulsion assemblies to produce lifting and driving forces between magnets and ferrous or steel rail track. This maglev system is more stable, wheel-less, standstill levitated, compatible with conventional rail track, unsophisticated, low cost and safe with no derailing possibilities.

It is a further object to provide a novel magnetostatic propulsion (MSP) or long stator linear motor (MSP LSLM) technology for applications such as propulsion element in the said maglev vehicle system as another embodiment of the present invention. The propulsion force is generated between a magnet assembly as a rotor and a magnet-free and coil-free long steel rail as a stator.

It is also a further object of this invention to provide a novel magnetostatic or passive permanent magnet bearing (MSS PMMB) technology for industrial applications such as compressors, turbines, pumps, motors and generators etc. A passive MSS PMMB maglev wind turbine is also an important embodiment described in this presentation under this technology category. This novel magnetic bearing technology is fully permanent magnet made and features with high levitating force output per magnet weight used, and elimination of complexity in the current active magnetic bearing (AMP). This technology makes a light weighted and efficient wind turbine possible with less rotational inertia and low cut-in wind speed. Besides, it is also a more stable suspension technology due to its spring-like force nature between magnet and steel.

Additional advantages, objects and novel features of the present invention will become apparent to those skilled in the art upon examination of the following and by practice of the invention, and spirit of the present invention can be further employed in numerous other embodiments.

### BRIEF DESCRIPTION OF THE DRAWINGS

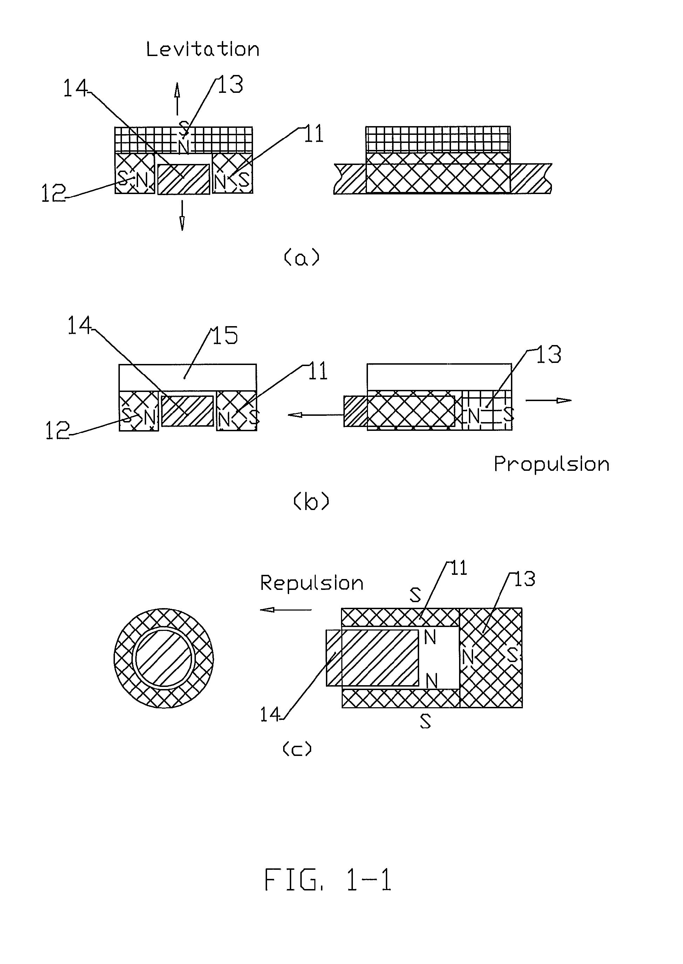

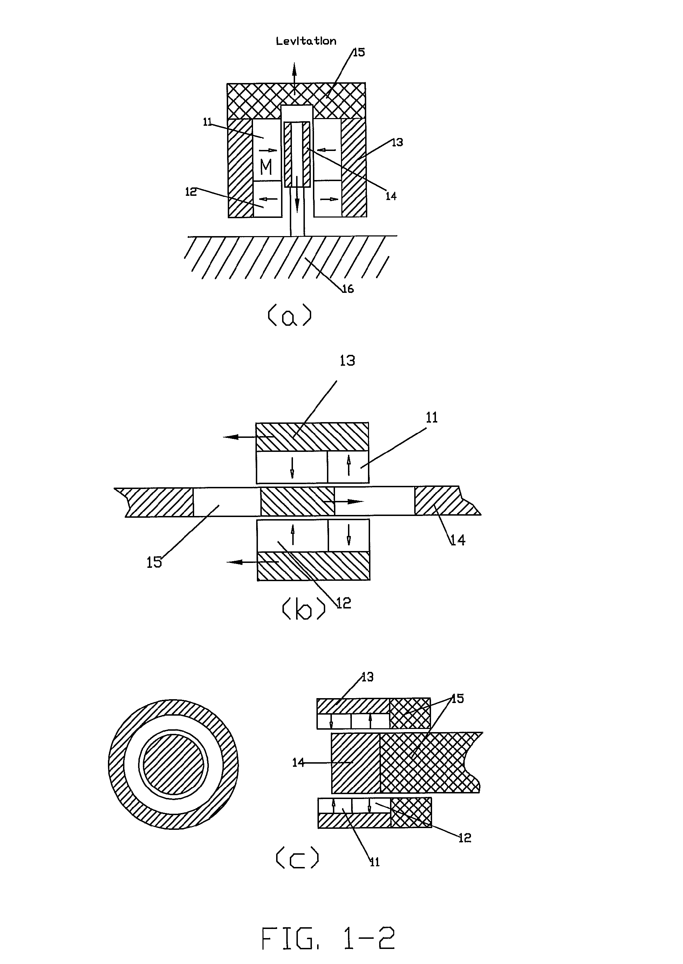

FIG. 1-1 shows schematically three typical basic configurations of the said magnetostatic suspension (MSS) and magnetostatic propulsion (MSP) of the present invention. (a) is an illustrative cross sections of front and side views of a MSS magnet array and levitation functioned. (b) is an illustrative cross sections of front and side views of a MSP magnet array and propulsion functioned. (c) is an illustrative cross sections of front and side views of another MSS magnet array and force pressure or force cushion functioned.

FIG. 1-2 shows schematically three typical enhanced configurations of the said magnetostatic suspension (MSS) and magnetostatic propulsion (MSP) of the present invention based on the three basic configurations in Fig.1-1.

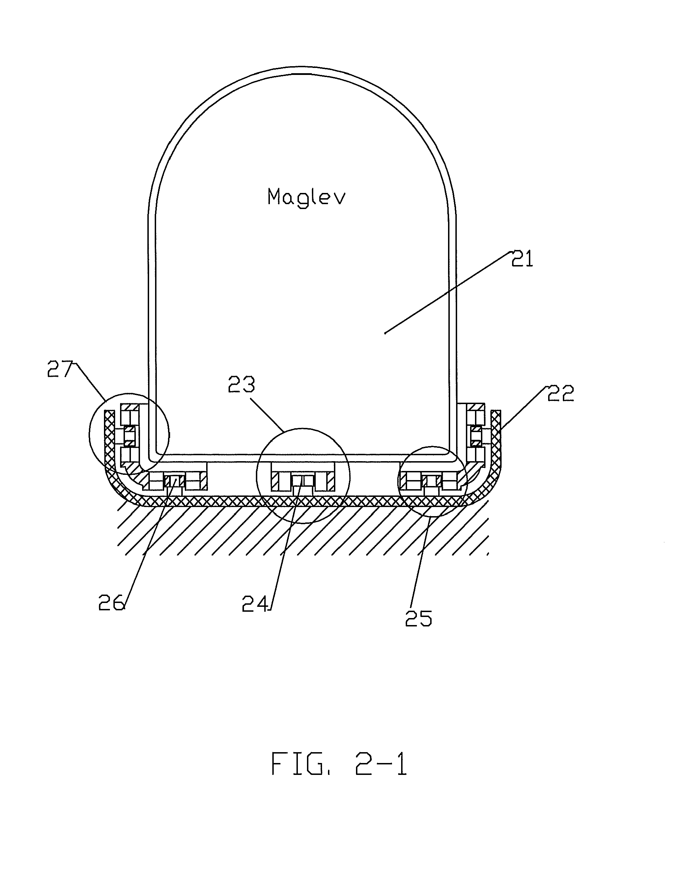

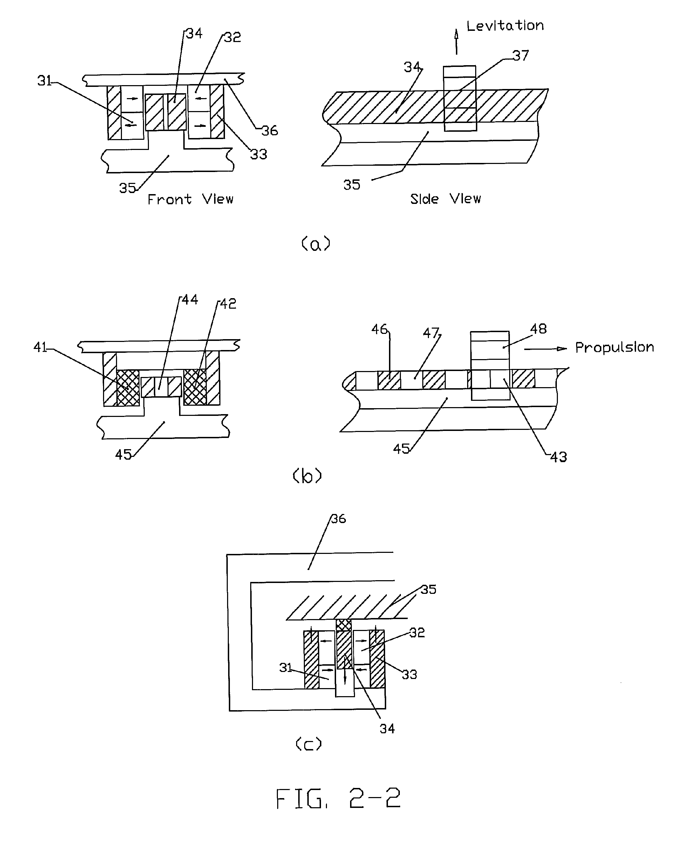

FIG. 2-1 shows schematically cross section of a typical MSS and MSP maglev vehicle system as one embodiment of the present invention. A maglev body **21** is levitated by MSS system **25,** and balanced and guided by MSS system **27** and propelled by MSP system **23.**

FIG. 2-2 shows schematically typical MSS system and MSP system and a derivative MSS system in the maglev vehicle system. (a) is an illustrative cross sections of front and side views of the MSS system **25** and **27** of Fig. 2-1. (b) is an illustrative cross sections of front and side views of the MSP system **23** of Fig. 2-1. (c) is an illustrative cross sections of front view of another MSS system which is installed under the rail track **22** of Fig.2-1.

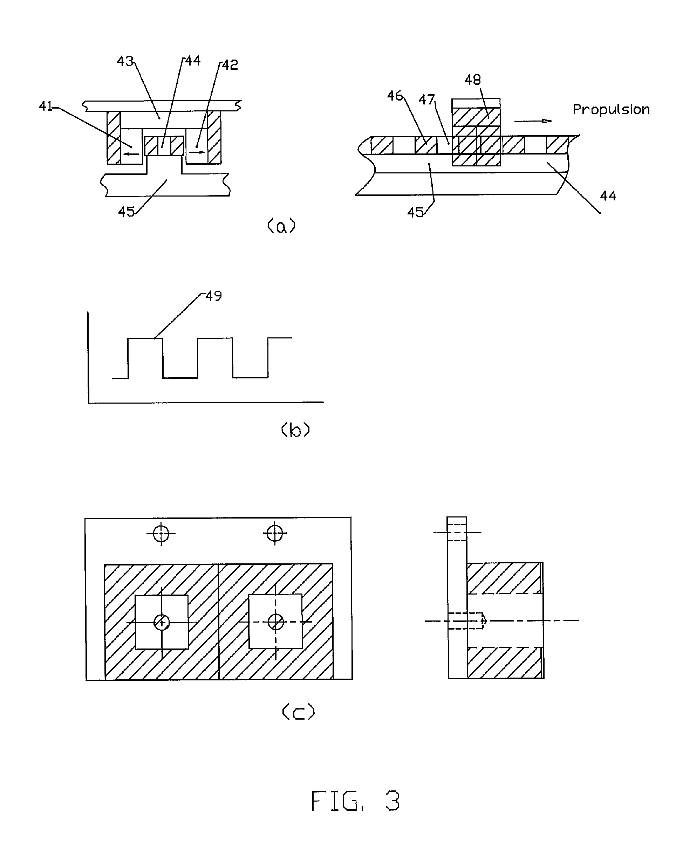

FIG. 3 shows schematically a typical MSP long stator linear motor system (LSLM) as another of the embodiments of the present invention. (a) is an illustrative cross sections of front and side views of a MSP magnet array and propulsion functioned. (b) is a typical current supply to an electromagnet as a rotor assembly. (c) is an illustrative cross sections of front and side and top views of a typical electromagnet assembly as a rotor in the MSP system.

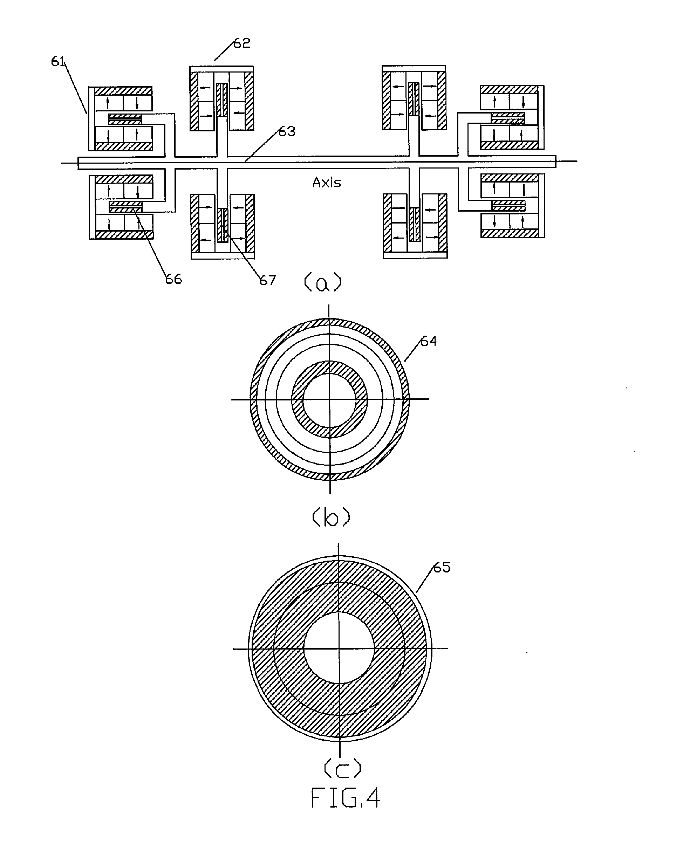

FIG. 4 shows schematically a typical MSS permanent magnet magnetic bearing (PMMB) system as another embodiment of the present invention. (a) is an illustrative front view cross section of magnet arrays and functions in a typical PMMB system, includes two sets of horizontal balancing disk systems and vertical balancing disk systems. (b) is an illustrative side view cross section of a typical horizontal balancing disk system. (c) is an illustrate side view cross section of a typical vertical balancing disk system.

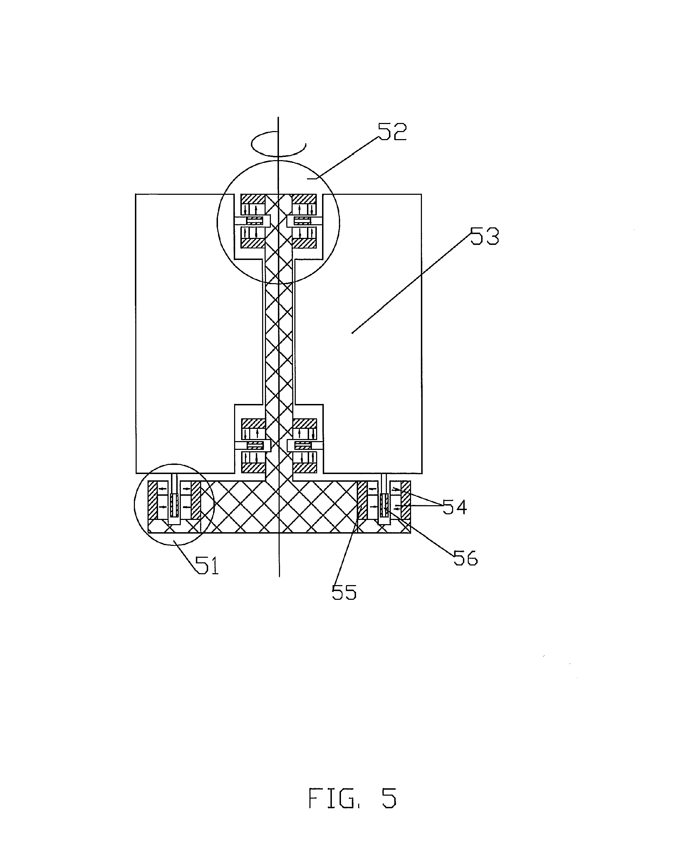

FIG. 5 shows schematically a cross section of front view of a typical MSS maglev wind turbine system as one embodiment of the present invention. A turbine body **53** is still levitated above a supporting base comprised of a MSS system **51** and balanced axially by MSS systems **52** for friction-less rotating.

### DETAILED DESCRIPTION OF THE INVENTION

FIG.1-1 shows three typical basic MSS and MSP configurations **(a), (b)** and **(c).** Magnets **11, 12** and **13** in **(a), (b)** and magnets **11,13** in (c) are arrayed in a way as illustrated in the figure to create a strong gradient magnetic field in a cavity where a steel rail **14** is in. This gradient magnetic field then applies a repulsive force as arrowed in the figure on the steel rail. The magnets **11,12** and **13** are arrayed with their same magnetization poles (north or south) facing each other into the cavity. The configuration **(a)** is a so-called the magnetostatic suspension (MSS) system that provides levitation to a magnet assembly of the magnets **11, 12** and **13** above the ferrous rail track **14.** The configuration **(b)** is a so-called magnetostatic propulsion (MSP) system that provides propulsion on a magnet assembly of the magnets **11, 12** and **13** away a steel block **14.** The magnets are supported through a nonmagnetic frame **15.** The configuration **(c)** is another magnetostatic suspension (MSS) system that provides shock absorption or force cushioning or pressure generating on a steel shaft **14** by an assembly of the magnets **11, 13** here the magnet **11** is a radially magnetized ring magnet. In the MSS configuration **(a),** by tilting the magnet **13's** magnetization forward or backward a combination of suspension (vertical) and propulsion (horizontal) is achieved. Both the forces in both MSS and MSP systems are magnetostatic. The magnet assembly of the magnets **11, 12** and **13** can be operatively attached to bottom of a moving object, and the ferrous or steel rail **14** can be operatively a rail track. Thus suspension and propulsion are produced between a moving object and its rail track.

The MSS suspension force is inherently stable vertically because it is more like a spring force with a balance point existed. In the configuration **(a)** of **FIG.1-1****,** the steel rail **14** inside the cavity of the magnet assembly experiences a repulsive force when it approaches the magnet **13** and the force gets bigger and bigger. In opposite direction when the steel rail is leaving the magnet assembly's cavity an attractive force is experienced that forces the steel rail back inside the cavity. The magnetostatic force is spring like. To stand still the suspension an external horizontal offset force would be required on the rail because the rail experiences an unstable leftward or rightward force to the cavity's wall of the magnet **11** or **12** when it is not in the exact middle position of the cavity. The external offset force could be a pair of electromagnets or one or more MSS assemblies. The magnets **11, 12** and **13** in the configurations **(a), (b)** and the magnets **11** and **13** in the configuration **(c)** are permanent magnets, electromagnets or superconducting magnets or a mixture of all the aforementioned. Current flowing in the electromagnet can be either constant or alternative depends on a particular function desired in a practice. The rail **14** is generally made of a soft ferromagnetic material, such as ferrous steel, but also a mixture of different substance including at least a soft ferromagnetic material.

The above descriptions to **FIG.1-1** are just exemplary of the spirit of the present invention and diversity of such as quantity of magnet used; the geometries and array of the magnets are not limited or confined by the above description. An embodiment of the present invention could be more complex by consisting a number of such basic configurations or systems. **FIG.1-2** shows description of enhanced MSS and MSP configurations based on the configurations **(a), (b)** and **(c)** illustrated in **FIG.1-1****.** Suspension and propulsion are strengthened in the configurations **(a), (b)** and **(c)** in **FIG.1-2** by actually combining together two basic configurations in **FIG.1-1****.** The configuration **(a)** is an enhanced MSS system that consists of two pairs of magnets **11** and **12** with their magnetization aligned as indicated in the figure, resulting a stronger gradient magnetic field in the cavity, thus a stronger spring-like resilient force on the steel rail **14** placed in. A steel flux return path **13** is added to increase flux output in the cavity and shield the field leakage as well. The levitation force as arrowed in the figures is spring-like and always towards an origin position or zero force point and increases as a gap between magnet system and the steel rail **14** decreases. The force always tends to bring the magnet system (or vehicle body in a maglev vehicle system) back to the origin position. This feature can avoid derailing of a maglev vehicle as the vehicle is always pulled back to the rail. This origin position is a position where the steel rail feels zero force inside the cavity. Again at horizontal direction the steel rail can not always be positioned in the middle of the cavity because of unstable attraction forces applied by the magnets and an external force is needed to offset horizontally the leftward or rightward forces to keep the steel rail from contacting the magnets. The external force can be a pair of electromagnets or one or more MSS assemblies. The steel rail **14** inside the cavity of the magnet assembly is mounted onto a nonmagnetic support or rail track base **16.** In order to reduce the unstable leftward or rightward forces the steel rail **14** is split into two thinner steel rails spaced by a nonmagnetic metal rail, as illustrated in the figures. The configuration **(b)** of **FIG.1-2** is an enhanced MSP system that also consists two pairs of magnets **11, 12** and flux return paths **13** with their magnetizations aligned as illustrated in the figure to produce a spring-like horizontal or propulsion force on a steel rail **14.** In this case the long steel rail is not made of whole steel, but a discrete steel blocks connected by non-magnetic material blacks **15** alternatively as illustrated in the figure. The magnet pairs **11** and **12** in the MSP configuration are electromagnets or a mixture of electromagnets and permanent magnets. Thus net propulsion (forward or backward) is achieved by just regulating the current applying to the electromagnets. The configuration (c) of **FIG.1-2** is another enhanced MSS system that also consists of two pairs of ring magnets **11, 12** and flux return path **13** for force enhancement to produce a spring-like force on the steel shaft **14.** Material **15** is a non-magnetic support frame to the whole magnet array and steel shaft.

The general concept involved here in this invention of magnetostatic suspension (MSS) and magnetostatic propulsion (MSP) technologies are that a ferrous metal or a soft ferromagnetic substance can be magnetized into a permanent magnet's function temporarily and then interacts with other magnets to produce a temporary attractive or repulsive force as desired. The concept is essential when applied to long distance transportation cases such as maglev vehicle system because basically a long steel rail can be turned into a permanent magnet wherever the vehicle goes above without a huge amount of magnets being physically installed along the rail's full length. To achieve this the only thing needs to do is equipping the vehicle with a magnet assembly to magnetize the steel rail underneath. Usually a steel material attracts to a magnet because a single magnet always generates a magnetic field that its field gradient vector aligns oppositely with its magnetic field. In this invention, the unique MSS arrayed magnet system generates a high gradient field with its vector aligns along the field's vector that functionally imposes the ferrous or steel rail a repulsive force like two permanent magnets do when facing their poles each other.

### INDUSTRIAL APPLICABILITY

**FIG.2-1** shows schematically a cross-section view of a magnetostatic suspension (MSS) and magnetostatic propulsion (MSP) maglev vehicle system, as a primary embodiment of the present invention. The system consists basically three major assemblies: MSS levitation assembly **25,** MSP propulsion assembly **23** and MSS stabilizing and guidance assembly **27.** A vehicle body **21** and its vertical undercarriage magnets assembly **23, 25** and **27** are levitated and propelled against steel rail tracks **24** and **26,** which are mounted onto non-ferromagnetic elevated structures of a track way **22.** The vehicle body is levitated at standstill and propelled through the magnetostatic forces produced between the magnets assembly **23, 25** and the ferrous rail tracks **24** and **26.** Several the said MSS and MSP assemblies might be used in a maglev vehicle system in order to obtain enough weight suspension and propulsion power. In this embodiment the steel rail tracks **24** and **26** are more like the ones can be found in conventional rail tracks, no coils or magnets or other sophistication or a skyway required. Appropriate geometries of the steel rail are indeed required to meet desired lifting and propelling forces. It is a low budget system to build and operate than the current maglev vehicle systems. The assembly **27** is for transversal balance and guidance by offsetting the rightward or leftward forces from the assembly **25** and the others such as wind force and centrifugal force when the vehicle changes its direction. The magnets in the assembly **27** are electromagnets but a mixture of permanent magnets and electromagnets is possible under certain circumstances. The assembly **27** can be simply replaced by a pair of pairs of attractive electromagnets mounted on the vehicle body facing both sides of the steel rail. The spring-like force featured in this invention provides a very stable and easy controlled levitation, and holds the vehicle body tightly to the rail that totally eliminates the possibility of derailment that is possible in current EMS and EDS systems.

**FIG. 2-2** shows the typical assemblies of **24, 25** and **27** in the maglev vehicle system of **FIG. 2-1****.** **FIG.2-2 (a)** is a schematic description of the MSS assemblies **25** and **27** in **FIG. 2-1****.** A steel rail **34** is placed inside the cavity of a magnet assembly **37** consisting of magnet pairs **31** and **32** that are mounted to the bottom of a vehicle body **36.** The magnet pairs **31, 32** and flux return paths **33** are arrayed in a way as indicted in the figure that generates a spring-like force on the steel rails **34** that is mounted on a non-magnetic elevated structure **35** of a railway foundation. The magnets used in this assembly are permanent magnets such as Neodymium Iron Boron, but possibly electromagnets or superconducting magnets or a mixture of any two or three of the aforementioned. **FIG.2-2 (b)** shows a schematic description of the MSP assembly **24** in **FIG.2-1****.** A magnet assembly **48** is attached operatively to the vehicle body. It can be a pair of electromagnets but a mixture of permanent magnets and electromagnets is preferable in certain cases for both controllability and weight reduction desired. A rail **44** made of alternating magnetic and nonmagnetic material blocks is placed in the cavity. **FIG. 2-2 (c)** shows a derivate MSS suspension structure that is installed beneath instead of above rail track **35.** The same levitation effect is achieved thanks to the spring like force features of the MSS system.

**FIG. 3** shows schematic description of a MSP long stator linear motor (LSLM) system as a second embodiment of the present invention. **(a)** in **FIG.3** is a schematic cross section of front and side views of the MSP LSLM system that consists of a rotor assembly **48** and a long stator or steel rail assembly **44.** The rotor assembly **48** is basically the similar one as illustrated in **FIG.1-2 (b)** and **FIG. 2-2 (b)** that consists of two pairs of magnets **41** and **42.** The magnets are electromagnets or mixtures of permanent magnets and electromagnets. The long stator or steel rail is made of alternating magnetic block **46** and nonmagnetic block **47** on a certain spacing pattern for the reasons above discussed. The electromagnets are applied with a current of a waveform like **49** in **FIG.3 (b)** and its magnetic field generating matches the position alternation of the magnetic block **46** by a position sensor's feedback. By regulating the current's phase changing the vehicle's acceleration or deceleration or brake can be functioned. **FIG.3 (c)** is schematic description of a typical rotor assembly **48** consisting of two pairs of coil packs or electromagnets. The number of the coil packs can be as many as wanted to meet propulsion requirement.

**FIG.4** shows schematic cross-sections of front and side views of a MSS permanent magnet magnetic bearing (PMMB) system as a third embodiment of the present invention. The whole structure is round around a shaft axis **63.** The system consists of two sets of round shaped MSS disk assemblies **61** and **62** with each set located at each end of a nonmagnetic shaft axis **63.** The assembly **61** is to provide the shaft assembly **63** with a horizontal spring-like balance force and the assembly **62** is to provide the shaft assembly **63** with a spring-like vertical suspension. The assemblies comprise a bearing chock disks **64** or **65** and a steel ring assembly **66** or **67.** Inside the bearing chocks there are two pairs of magnet rings aligned as illustrated to produce a spring-like force on the steel rings **66** and **67.** The existence of the unstable rightward or leftward forces in each disks are offset to each other by a careful design that leads to a fully standstill suspension of the shaft assembly **63** and allows it spin around its axis frictionlessly. To reduce the transverse force one effective way is to make the steel ring assembly **67** from two thinner steel rings spaced by and mounted on a nonmagnetic frame between. This unique design can dramatically reduce the leftward or rightward forces and make the forces be offset by each other the assemblies **61** and **62** much easy in manufacturing. The magnets are rings but also combination of segments or other diversities.

**FIG. 5** shows a schematic cross section of a MSS maglev wind turbine system as fourth embodiment of the present invention. The turbine system consists of MSS assemblies **51** and **52.** Weight of the turbine **53** is levitated up through the assembly **51** and its rightward or leftward forces are offset through the assembly **52.** The assemblies consist of magnets **54,** a flux return steel path **55** and steel ring assembly **56.** All magnets are operatively attached to a base or foundation of the wind turbine rather than to the turbine body that has great advantages to lightweight the turbine load or inertia. A number of such assemblies might be used to meet a desired weight lifting power or position balancing. In the system the turbine body can freely move around its vertical axis without a lifting gap limitation, that makes big benefit of allowing a big tolerance of turbine mass and position variation during operation and allows loose tolerances in manufacturing.

The foregoing descriptions of the invention have been presented for purposes of illustration and description and are not intended to be exhaustive or to limit the invention to the precise form disclosed. Many modifications and variations are possible in light of the above teaching. The embodiments were chosen and described to best explain the principles of the invention and its practical applications to thereby enable others skilled in the art to best use the invention in various embodiments and with various modifications suited to the particular use contemplated. The scope of the invention is to be defined by the following claims.

## Claims

1. A configuration of magnetostatic suspension (MSS) and/or magnetostatic propulsion (MSP) that provide levitation or propulsion on a moving object comprising at least:
a magnet assembly that is attached to said moving object to generate a gradient magnetic field on a ferrous or steel rail or a steel shaft and produces a spring-like resilient suspension or
propulsion to the moving objects;
a ferrous or steel rail or a steel shaft assembly that is positioned in the gradient magnetic field generated by the said magnet assembly to suspend (MSS) or propel (MSP) the moving object above or away from.

2. The magnetostatic suspension (MSS) and/or magnetostatic propulsion (MSP) system of **claim 1,** wherein the said magnet assembly consists of at least a permanent magnet, or electromagnet, or superconducting magnet or mixture of any two or three of the aforementioned.

3. The magnetostatic suspension (MSS) and/or magnetostatic propulsion (MSP) system of **claim 1,** wherein the said magnet assembly is not limited or confined to some particular magnets' alignments, quantities and geometries but to its function is to produce a spring-like resilient force on a ferrous or steel rail or a steel shaft.

4. The magnetostatic suspension (MSS) and/or magnetostatic propulsion (MSP) system of **claim 1,** wherein the said ferrous or steel rail or steel shaft assembly consists at least a steel, or another soft ferromagnetic substance or a mixture of magnetic and nonmagnetic materials.

5. A long stator linear motor (LSLM) system by applying the MSP technology of **claim 1** comprising at least:
a long steel stator assembly; and
a rotor magnet assembly; and
an electric power and speed control circuit for powering, speed regulating and braking.

6. The MSP long stator linear motor system of **claim 5,** wherein the said long steel stator assembly is a ferrous or steel rail or steel shaft assembly of both **claim 4** but is specifically made of alternating magnetic blocks and non-ferromagnetic blocks at a spacing pattern along its full length.

7. The MSP long stator linear motor system of **claim 5,** wherein the said rotor magnet assembly consists at least a magnet assembly of both **claim 2** and **claim 3** that includes at least an electromagnet or superconducting magnet or mixture of electromagnet and permanent magnets to generate a propulsion force on the said long steel stator.

8. The MSP long stator linear motor system of **claim 5,** wherein the said current power and speed control circuit powers the said rotor magnet assembly with an alternative current modulated by a position sensor feedback to implement speed controlling and braking.

9. A maglev vehicle system by applying the MSS and MSP technologies of **claim 1** comprising at least:
a vehicle body; and
a MSS assembly for levitation for the said vehicle body; and
a MSS assembly or a pair of electromagnets for horizontal balancing and guidance for the said vehicle body; and
a MSP assembly as a long stator motor for propulsion for the said vehicle body.

10. The MSS and MSP maglev vehicle system of **claim 9,** wherein the said MSS assembly consists of at least a magnet assembly of both **claim 2** and **claim 3** and a steel rail assembly of **claim 4.**

11. The MSS and MSP maglev vehicle system of **claim 9,** wherein the said MSP assembly is a MSP long stator linear motor (LSLM) system of **claim 5.**

12. A permanent magnet magnetic bearing system (PMMB) by applying the
MSS technology of **claim 1** to provide a standstill suspension for a shaft's frictionless rotation comprising at least:
a set of bearing chock magnet assemblies; and
a bearing shaft assembly.

13. The MSS permanent magnet magnetic bearing system of **claim 12,**
wherein the said bearing chock assembly is made of at least a pair of permanent magnet rings or combination of magnet segments that assembled in the way described in the **Fig. 4** to provide spring-like resilient forces on the said bearing shaft assembly both vertically and horizontally.

14. The MSS permanent magnet magnetic bearing system of **claim 12,** wherein the said bearing shaft assembly is made of at least a steel ring mounted onto a nonmagnetic ring frame and its structure and geometry are diversified and not confined to any particular description but to the function of producing a standstill suspension for its frictionless rotating.

15. A maglev wind turbine system by employing the MSS technology of **claim 1** to provide weight lifting and frictionless rotating to a wind turbine comprising at least:
a wind turbine body;
a bearing chock magnet assemblies of **claim 13** and;
a bearing shaft assembly of **claim 14.**
